# EUROPEAN PATENT APPLICATION

(11) **EP 4 703 760 A1**
(43) Date of publication of application: **04.03.2026**
(21) Application number: 24197439.3
(22) Date of filing: 30.08.2024
(51) Int. Cl.: G01S 7/40, G01S 7/41, G01S 13/931, G01S 7/48, G01S 7/497

(54) **DETECTING A SENSOR MOUNTING ROLL ANGLE OF AN ENVIRONMENT DETECTION SENSOR**

(71) Applicant: Robert Bosch GmbH, 70442 Stuttgart (DE)
(72) Inventor: Shravani, Dandin, 560050 Bengaluru (IN); Chinnan, Akshay, 670661 Kerala (IN); James, Jithin, 74321 Bietigheim-Bissingen (DE); Kishore, Mullapudi, Bengaluru (IN)

(57) **Abstract**

A method of detecting a sensor mounting roll angle (ϕ) of an environment detection sensor (10) mounted to a vehicle (12), the method comprising: obtaining (14) detection data of a plurality of detections from the sensor (10), the detection data including signal strength, velocity information, and angle information, the angle information comprising horizontal angle information and vertical angle information; selecting (22), from the detections, detections of stationary objects, based on velocity information of the detections and based on velocity information of the vehicle (12); entering (28) the selected detections into a two-dimensional histogram of signal strength over horizontal angle and vertical angle; evaluating (40) the two-dimensional histogram to determine an estimate of the sensor mounting roll angle (ϕ).

## Description

### FIELD OF THE INVENTION

The invention relates to detecting a sensor mounting roll angle of an environment detection sensor mounted to a vehicle.

### BACKGROUND

Motor vehicles are increasingly being equipped with driver assistance systems, for example, for automatically controlling proximity (ACC, adaptive cruise control) or for warning of imminent collisions and/or for initiating measures for averting the collision or for mitigating the effects of the collision (PSS; predictive safety system). In such driver assistance systems, or in automated driving systems, a radar sensor or a lidar sensor is used for monitoring the surrounding traffic and, in particular, for locating other vehicles as well as stationary objects. For an accurate detection of the positioning of detected objects, there is a necessity for detection of alignment (yaw, pitch, roll) of the sensor used to detect the objects (with respect to the vehicle where the sensor is mounted). Since the driver generally relies on the operability of the assistance system, it is necessary, for reasons of safety, to know the alignment of the sensor. If the sensor mounting deviates from a nominal mounting angle, the system does not correctly interpret the situation in field of view of the sensor. In particular, an inaccuracy in positioning of the detected objects occurs. This might lead to the system initiating wrong actions to the overall system.

### PRIOR ART

CN 116381632 A describes a self-calibration method and device for a radar roll angle, including the steps of: obtaining a motion state of a first vehicle, transmitting a pulse signal and receiving an echo signal by a radar when the motion state meets a preset condition, recognizing a second vehicle in a plurality of lanes in a first direction according to the pulse signal and the echo signal; screening out a plurality of target vehicles meeting a preset condition according to a plurality of transverse distances; and calculating position information of the plurality of target vehicles; and calculating the roll angle deviation value of the radar according to the multiple pieces of position information, and adjusting the installation angle of the radar according to the roll angle deviation value.

CN 116381633 A describes a radar roll angle self-calibration method and device. When a vehicle is provided with a first guardrail on the first side and is provided with a second guardrail on the second side, a roll angle deviation value of the radar is calculated according to a plurality of first angle values and a plurality of second angle values, which are calculated based on a plurality of first echo signals of the first guardrail and a plurality of second echo signals of the second guardrail.

US 2022/0229168 A1 describes an axial misalignment estimation apparatus that extracts, from reflection points detected by a radar apparatus, road-surface reflection points detected by reflection on a road surface. An axial misalignment angle and a height of the radar apparatus are estimated using a relational expression established between at least two unknown parameters and at least two elements included in the apparatus system coordinates of the road-surface reflection point.

### SUMMARY

It is an object of the invention to provide a method of detecting a sensor mounting roll angle of a radar sensor or lidar sensor that is mounted to a vehicle.

The object is solved by the subject-matter of the independent claims. Further embodiments are indicated below and in the dependent claims.

The core of the invention is that the roll angle of the sensor is estimated based on the reflection angle from stationary objects from the field of view of the sensor. The sensor may, for example, be a radar sensor or a lidar sensor.

According to an aspect of the invention, the object is solved by a method of detecting a sensor mounting roll angle of an environment detection sensor mounted to a vehicle. The method comprises obtaining detection data (object information) of a plurality of detections from the sensor. The detection data may include signal strength, velocity information, and angle information. In particular, the detection data of each of the plurality of detections may include signal strength, velocity information, and angle information. The angle information comprises horizontal angle information and vertical angle information. The method further comprises selecting, from the detections, detections of stationary objects, based on velocity information of the detections and based on velocity information of the vehicle. The selected detections are entered into a two-dimensional histogram of signal strength over horizontal angle and vertical angle, and the two-dimensional histogram is evaluated to determine an estimate of the sensor mounting roll angle. The estimate of the sensor mounting roll angle may be output.

The selected detections may also be termed stationary detections. The detections may also be termed reflections or locations (locations of reflections). Herein, the term objects is also used to refer to the detections or detected objects. The detections may be obtained in the form of point clouds of detections.

The signal strength of the detection data may, for example, be signal amplitude or signal intensity or bin count of a spectrum. In the two-dimensional histogram, signal strength may be accumulated bin count of the histogram. That is, in the histogram, signal strength may be accumulated signal intensity or accumulated bin counts of respective spectrums.

By forming the two-dimensional histogram of signal strength over horizontal angle and vertical angle, many stationary detections of different kinds of objects may contribute to the estimation of the sensor mounting roll angle. Therefore, robustness of the estimation may be improved. Moreover, the method may be applicable to many different driving situations. In particular, it is not required that other vehicles be present and move in parallel lanes. Nor is it required that guide rails be present to the left and to the right of the vehicle. The method may even be performed, for example, when driving in an urban area. Since the method uses detections from stationary objects and does not rely on road clutter signals, robustness of the estimation may be further improved.

Thus, a roll angle in x direction may be detected in any sensor which could estimate horizontal and vertical reflection angle or position of the object in sensor field of view (the angle information), such as any sensor which provides horizontal and vertical reflection angle objects. The method may also work even when the sensor is misaligned in horizontal and vertical directions. It is advantageous that no specific calibration arrangements are required for the solution.

Horizontal angle information may be information about an angle in left-right-direction. Horizontal angle information may be azimuth angle information. Vertical angle information may be information about an angle in down-up-direction. Horizontal angle information may be elevation angle information.

The sensor mounting roll angle may also be termed the sensor roll angle. It is the rotation angle of the sensor around its longitudinal axis in the direction of view, generally denoted by x axis or x direction. In case of a front sensor of a vehicle, this direction is the main direction of movement.

The environment detection sensor may be one of a radar sensor or a lidar sensor.

The two-dimensional histogram may be termed a two-dimensional spectrum, in particular, a spectrum of horizontal angle and vertical angle.

The above aspects of the invention may include one or more of the following features.

The method may include measuring the detections and estimating velocity information and angle information, and/or other attributes of the detections.

The detection data (of each of the plurality of detections) may further include distance information.

In embodiments, the method may include: filtering the detections according to a distance range of a distance to the sensor, based on distance information of the detection data, to obtain distance-filtered detections. Said filtering may be performed before the selecting of detections of stationary objects. In the step of selecting of detections of stationary objects, the detections of stationary objects may be selected from the distance-filtered detections. Alternatively, the selected stationary detections may be filtered according to the distance range of a distance to the sensor. That is, the filtering and the selecting may be performed in any order.

The step of filtering the detections according to a distance range of a distance to the sensor may be a step of filtering the detections according to a distance range of a distance to the sensor, to obtain distance-filtered detections that have at least a minimum distance and/or at most a maximum distance. For example, the filtering may be done to obtain distance-filtered detections that have at least a minimum distance and at most a maximum distance. A minimum distance may be advantageous in order to exclude detections that might have a relatively large absolute value of an elevation angle due to having a short distance from the sensor. A maximum distance may be advantageous in order to exclude detections that have vertical and/or horizontal angles close to zero due to a long distance from the sensor.

The method may include: obtaining said velocity information of the vehicle. For example, the velocity information may be obtained via a bus system of the vehicle.

In the step of selecting of detections of stationary objects, the detections of stationary objects may include stationary objects other than reflections from the road or ground.

In the step of selecting of detections of stationary objects, the detections may be selected based on velocity information of the detections and based on velocity information of the vehicle, the velocity information of the vehicle being associated with the detection. That is, the velocity information of the vehicle may be information about the velocity at the time the detection has been made.

The method may include accumulating the selected detections. In particular, detections may be accumulated that have been made/measured at different points in time. For example, the method may include accumulating the selected detections in the two-dimensional histogram. For example, the step of entering the selected detections into a two-dimensional histogram of signal strength over horizontal angle and vertical angle may include accumulating the selected detections in the two-dimensional histogram. For example, selected detections of a duration of detection that spans over of a predetermined duration or that corresponds to a predetermined driving distance may be accumulated. For example, the predetermined duration or predetermined driving distance may be at least 30 seconds or at least 500 meters, more preferably, at least 5 minutes or at least 5000 meters, more preferably at least 10 minutes or at least 10000 meters. The duration of detection may be a compound duration that may include more than one discontiguous sections of a duration of detection. That is, the duration of detection may be compiled piecewise. The duration of detection may be an accumulated duration of detection.

Accumulating the selected detections makes it possible that more stationary detections of different kinds of objects may contribute to the estimation of the sensor mounting roll angle. In particular, when detections of stationary objects are selected based on velocity information of the vehicle, the velocity information of the vehicle being associated with the detection, stationary detections may be reliably accumulated that have been measured over a time period in which the velocity of the vehicle may vary.

In embodiments, the method further includes: obtaining kinematic driving data of the vehicle; and checking whether a predetermined straight driving condition is fulfilled, based on the kinematic driving data. For example, when the straight driving condition is fulfilled, the selected detections are entered into the two-dimensional histogram. For example, only detections that fulfil the straight driving condition may be entered into the two-dimensional histogram. The kinematic driving data may include a yaw rate and/or a driving speed.

For example, the method may include filtering the detections according to whether they are associated with kinematic driving data that fulfils the straight driving condition. For example, the filtering may be performed at any point before evaluating the two-dimensional histogram. The filtering may be a prefiltering that is performed before the filtering of the detections according to a distance range of a distance to the sensor. The filtering may be performed before the selecting of detections of stationary objects. In particular, the filtering may be performed before the entering of the selected detections into the two-dimensional histogram.

The kinematic driving data of the vehicle may be associated with the respective detections. That is, the kinematic driving data may be kinematic driving data at the time the detection has been made. The kinematic driving data may include the velocity information of the vehicle.

The predetermined straight driving condition may include (define) a minimum driving speed. The minimum driving speed may be less than 10 m/s, preferably less than 5 m/s. The minimum driving speed may be greater than 1 m/s, preferably greater than 3 m/s. Thereby, only stationary objects are evaluated that have been measured while the vehicle moves.

The predetermined straight driving condition may (also) include (define) a maximum yaw rate. The maximum yaw rate may be less than 0.2 rad/s (radians per second), preferably less than 0.1 rad/s.

By observing the straight driving condition, it may be ensured that the vehicle has a known orientation to the ground.

In embodiments, the method includes: accumulating the selected detections that are associated with the straight driving condition being fulfilled, wherein selected detections of one duration of detection or of more than one discontiguous sections of a duration of detection are accumulated.

Thus, a duration of detection may be compiled of shorter periods of detection, during which the straight driving condition is fulfilled, interrupted by an intermediate interval during which the straight driving condition is not fulfilled. For example, no detections of the intermediate interval will be entered into the two-dimensional histogram.

In embodiments, the evaluating of the two-dimensional histogram comprises: estimating a linear relationship of vertical angle to horizontal angle, based on the two-dimensional histogram; and evaluating the estimated linear relationship to determine the estimate of the sensor mounting roll angle.

That is, the two-dimensional histogram may be evaluated by estimating a linear relationship of vertical angle to horizontal angle, based on the two-dimensional histogram; and evaluating the estimated linear relationship to determine the estimate of the sensor mounting roll angle.

Evaluating the estimated linear relationship to determine the estimate of the sensor mounting roll angle may comprise or be: evaluating a slope of the estimated linear relationship to determine the estimate of the sensor mounting roll angle.

Most of the stationary detections in real life situations can be expected to be at the sensor height. When in the two-dimensional histogram of signal strength over horizontal angle and vertical angle, the angles are expressed, for example, in degrees or radians, the linear relationship may correspond to a slope (of degrees per degrees, or of radians per radians) that directly corresponds to the value of the estimated sensor mounting angle. That is, in the histogram, the x-axis may be vertical angle expressed in degrees, and the y-axis may be horizontal angle expressed in degrees. Therefore, the slope a of a fitted linear relationship f(x)=ax+b across the histogram may be expressed in degrees/degrees, which is 1.

In embodiments, the evaluating of the two-dimensional histogram comprises:
for each horizontal angle corresponding to a column of the histogram (a column of signal strength over vertical angle), determining a vertical angle of the column at which the column comprises a maximum signal strength, and assigning the determined vertical angle to the horizontal angle (thus, a pair of horizontal angle and associated vertical angle may be defined);
estimating a linear relationship of vertical angle to horizontal angle, based on the horizontal angles and their assigned determined vertical angles of the two-dimensional histogram (for example, based on the determined pairs of horizontal angle and assigned vertical angle); and
evaluating the estimated linear relationship to determine the estimate of the sensor mounting roll angle.

Thus, for each horizontal angle, only the vertical angle with the maximum signal strength may be included for establishing the linear relationship. Therefore, background signals in the histogram below the relevant signals from stationary objects (that is, at lower elevation angles) may be prevented from affecting the estimation of the roll angle. In particular, ground reflections, that typically have a lower signal strength than reflections from objects, may be excluded from affecting the establishing of the linear relationship.

The estimating of a linear relationship may include taking into account the signal strength of the histogram at the horizontal angles and their associated determined vertical angles. Alternatively, the estimating of a linear relationship of vertical angle to horizontal angle may be based on only the values of the horizontal angles and of their associated determined vertical angles.

The detection data may further include attributes of the detections. The sensor may output the detections, including their attributes. The detection data may include at least one of signal quality, quality of the angle information, radial extension of reflection, lateral extension of reflection or, if applicable, radar cross section (in case of a radar sensor). These may be termed attributes of the detections.

In embodiments, the method includes: filtering the detections according to at least one of signal quality, quality of the angle information, radial extension of reflection, lateral extension of reflection or, if applicable, radar cross section (in case of a radar sensor), and/or signal strength.

Thereby, only the most reliable detections may be taken into account for evaluation.

According to an aspect of the invention, a self-calibration method of an environment detection sensor for a vehicle comprises the method of detecting a sensor mounting roll angle as disclosed herein. The self-calibration method further comprises: performing a self-calibration of the environment detection sensor based on the determined estimate of the sensor mounting roll angle.

The self-calibration method may further comprise: when the estimated sensor mounting roll angle deviates from a nominal mounting roll angle, compensating or adjusting the sensor mounting roll angle of the environment detection sensor in accordance with the estimated sensor mounting roll angle.

To determine accurate positioning of the objects, an auto calibration is advantageous in that it facilitates compensating the roll angle for the detected objects (in real life scenarios).

According to an aspect of the invention, an environment detection sensor for a vehicle comprises a control unit that is configured for performing the method of detecting a sensor mounting roll angle and/or the self-calibration method as disclosed herein.

An exemplary embodiment of the present invention is represented in the drawings and explained in greater detail in the following description.

### BRIEF DESCRIPTION OF THE DRAWINGS

Fig. 1 schematically shows a radar sensor mounted to a vehicle;
Fig. 2 illustrates a process of detecting a sensor mounting roll angle;
Fig. 3 illustrates steps of capturing detections;
Fig. 4 illustrates steps of evaluating captured detections; and
Fig. 5 and Fig. 6 show examples of diagrams of a two-dimensional histogram of signal strength over horizontal angle and vertical angle.

### DETAILED DESCRIPTION

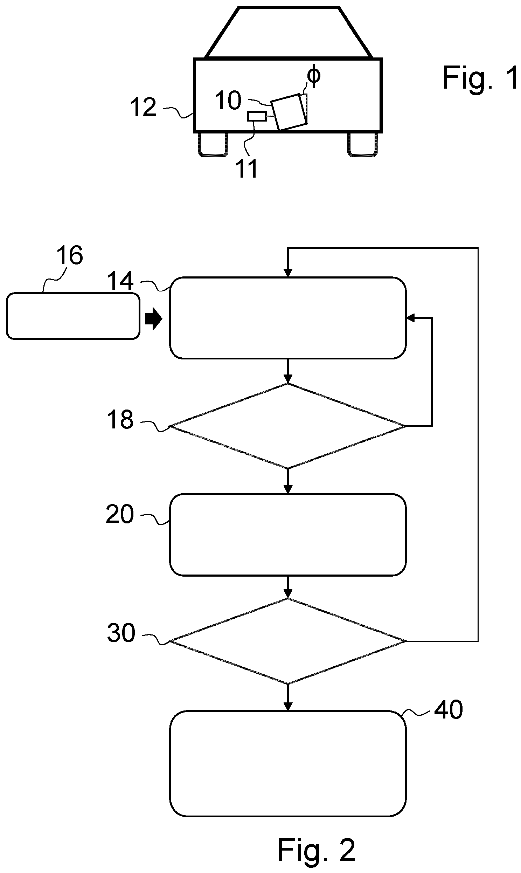

Fig. 1 schematically shows a radar sensor 10 having a control unit 11, the radar sensor being mounted to a vehicle 12 at a front position. As schematically shown, the radar sensor 10 is misaligned to the vertical axis by a roll angle ϕ about the x axis (the front direction of the field of view of the sensor).

Fig. 2 illustrates a process of detecting the sensor mounting roll angle ϕ.

In step 14, detections (reflections) in the form of detection data are received/obtained from the sensor 10, and kinematic driving data 16 of the vehicle 12 is obtained. The detection data include, for example, signal strength, distance information, velocity information, and angle information, the angle information comprising horizontal angle information and vertical angle information. The detection data further includes attributes such as signal quality, quality of the angle information, radial extension of reflection, lateral extension of reflection or radar cross section.

The kinematic driving data 16 includes a speed (velocity v) and a yaw rate of the vehicle 12.

In step 18, it is checked whether a predetermined straight driving condition is fulfilled, based on the kinematic driving data. The straight driving condition defines a minimum driving speed as well as a maximum yaw rate. In other words, it is checked whether the vehicle 12 is driving straight forward.

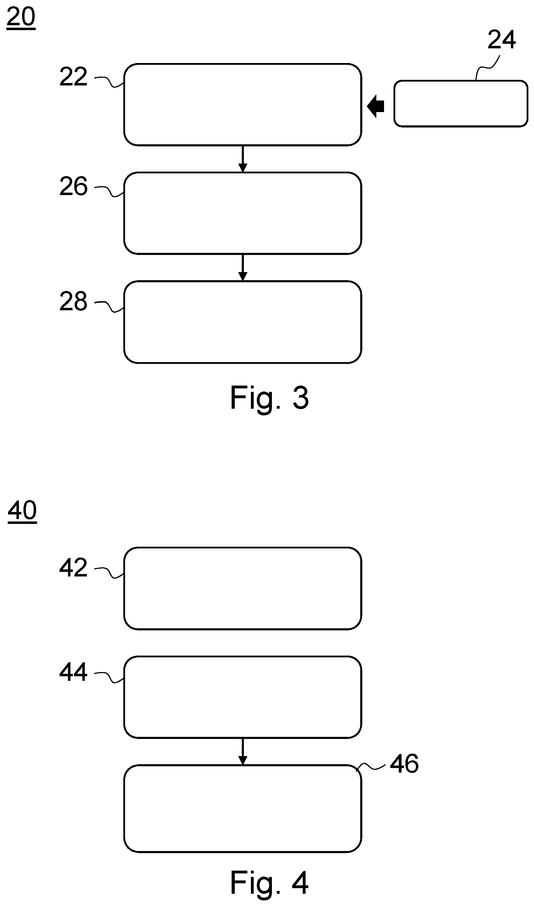

In step 20, when the straight driving condition is fulfilled, the obtained detections are captured, and stationary detections are entered into a two-dimensional histogram of signal strength over horizontal angle and vertical angle. This is explained further below with respect to Fig. 3. The stationary detections are accumulated in the histogram.

In step 30, it is checked whether enough stationary detections have already been accumulated. If not, the process is repeated from step 14.

If yes, the two-dimensional histogram is evaluated to determine an estimate of the sensor mounting roll angle, and a self-calibration of the sensor 10 is performed based on the determined estimate of the sensor mounting roll angle. This is explained further below with respect to Fig. 4.

Fig. 3 illustrates steps of capturing detections.

In step 22, stationary reflections or stationary point clouds (from objects) are filtered from the reflections received from sensor. In particular, detections of stationary objects are selected from the detections, based on velocity information of the detections and based on velocity information 24 (the velocity v) of the vehicle.

In step 26, the stationary reflections are further filtered based on location attributes, that is, attributes of the detections. In particular, the stationary reflections are filtered according to a distance range of a distance to the sensor, based on distance information of the detection data, to exclude detections that are closer than a low distance threshold and to exclude detections that are further away than a high distance threshold. Moreover, the stationary reflections are filtered according to the quality of the angle information and according to the radar cross section.

In step 28, the filtered stationary reflections are entered into a two-dimensional histogram of signal strength over horizontal angle and vertical angle. That is, the bi-dimensional histogram is computed using horizontal and vertical angles of the filtered locations. The signal strength is entered in the form of the logarithm of the signal strength. When step 28 is repeated, the filtered stationary reflections are accumulated in the histogram.

Fig. 4 illustrates steps of evaluating captured detections.

In step 42, the previously accumulated two-dimensional histogram of signal strength over horizontal angle and vertical angle is obtained.

In step 44, for each horizontal angle corresponding to a column of the histogram, a vertical angle of the column is determined at which the column comprises a maximum signal strength, and a linear relationship of vertical angle to horizontal angle is estimated, based on the horizontal angles and their respective determined vertical angles. In particular, a linear least-squares regression line is calculated from the bi-dimensional histogram based on the counts (or accumulated signal strength).

In step 46, the slope of the formed regression line is calculated to get an estimate of the roll angle ϕ of the sensor 10. Most of the reflections in real life detected by radar would be at the sensor height, and therefore the slope of the regressed line will give the roll angle ϕ of the sensor 10.

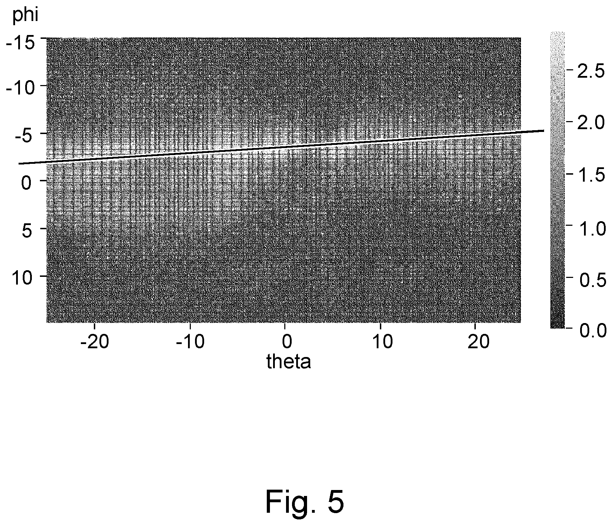

Fig. 5 shows an example of a diagram of a two-dimensional histogram of signal strength over horizontal angle theta and vertical angle phi. The formed regression line is schematically illustrated for the case of a roll angle of 3.5°.

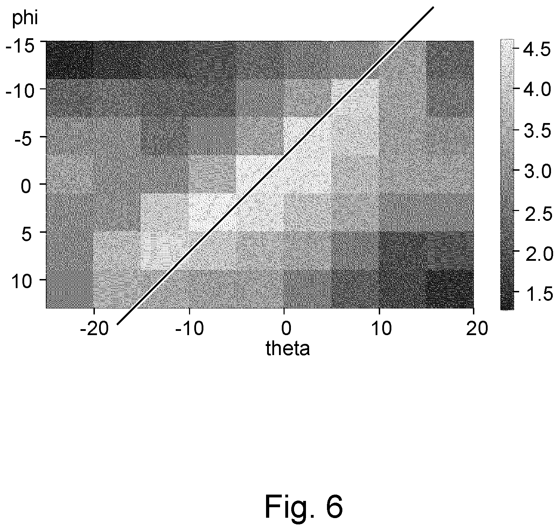

Fig. 6 shows another example of a diagram of a two-dimensional histogram of signal strength over horizontal angle theta and vertical angle phi. The formed regression line is schematically illustrated for the case of a roll angle of 45°.

## Claims

1. A method of detecting a sensor mounting roll angle (ϕ) of an environment detection sensor (10) mounted to a vehicle (12), the method comprising:
obtaining (14) detection data of a plurality of detections from the sensor (10), the detection data including signal strength, velocity information, and angle information, the angle information comprising horizontal angle information and vertical angle information;
selecting (22), from the detections, detections of stationary objects, based on velocity information of the detections and based on velocity information of the vehicle (12);
entering (28) the selected detections into a two-dimensional histogram of signal strength over horizontal angle and vertical angle;
evaluating (40) the two-dimensional histogram to determine an estimate of the sensor mounting roll angle (ϕ).

2. The method of claim 1, wherein the detection data further includes distance information, the method further comprising:
filtering (26) the detections according to a distance range of a distance to the sensor, based on distance information of the detection data, to obtain distance-filtered detections.

3. The method of claim 1 or 2, wherein the method further includes:
accumulating the selected detections.

4. The method according to any one of the preceding claims, wherein the method further includes:
obtaining kinematic driving data (16) of the vehicle (12); and
checking whether a predetermined straight driving condition is fulfilled, based on the kinematic driving data,
wherein, when the straight driving condition is fulfilled, the selected detections are entered into the two-dimensional histogram.

5. The method according to claim 4, wherein the method further includes:
accumulating the selected detections that are associated with the straight driving condition being fulfilled,
wherein selected detections of one duration of detection or of more than one discontiguous sections of a duration of detection are accumulated.

6. The method according to any one of the preceding claims, wherein the evaluating (40) of the two-dimensional histogram comprises:
estimating (44) a linear relationship of vertical angle to horizontal angle, based on the two-dimensional histogram;
evaluating (46) the estimated linear relationship to determine the estimate of the sensor mounting roll angle (ϕ).

7. The method according to any one of the preceding claims, wherein the evaluating of the two-dimensional histogram comprises:
for each horizontal angle corresponding to a column of the histogram, determining a vertical angle of the column at which the column comprises a maximum signal strength, and assigning the determined vertical angle to the horizontal angle;
estimating a linear relationship of vertical angle to horizontal angle, based on the horizontal angles and their assigned determined vertical angles of the two-dimensional histogram; and
evaluating the estimated linear relationship to determine the estimate of the sensor mounting roll angle (ϕ).

8. The method according to any one of the preceding claims,
wherein the detection data further includes at least one of signal quality, quality of the angle information, radial extension of reflection, lateral extension of reflection or, if applicable, radar cross section,
wherein the method includes:
filtering the detections according to said at least one of signal quality, quality of the angle information, radial extension of reflection, lateral extension of reflection or, if applicable, radar cross section.

9. The method according to any one of the preceding claims, wherein the environment detection sensor (10) is one of a radar sensor or a lidar sensor.

10. A self-calibration method of an environment detection sensor (10) for a vehicle (12), the method comprising the method according to any one of the preceding claims, the method further comprising:
performing a self-calibration of the environment detection sensor (10) based on the determined estimate of the sensor mounting roll angle (ϕ).

11. An environment detection sensor (10) for a vehicle (12), comprising a control unit (11) that is configured for performing the method according to any one of the preceding claims.

## Amended claims

### Amended claims in accordance with Rule 137(2) EPC.

1. A method of detecting a sensor mounting roll angle (ϕ of an environment detection sensor (10) mounted to a vehicle (12), the method comprising:
measuring, by the sensor (10), a plurality of detections;
estimating velocity information and angle information of the detections, the angle information comprising horizontal angle information and vertical angle information;
obtaining (14) detection data of the plurality of detections from the sensor (10), the detection data including signal strength, the velocity information, and the angle information;
selecting (22), from the detections, detections of stationary objects, based on velocity information of the detections and based on velocity information of the vehicle (12);
entering (28) the selected detections into a two-dimensional histogram of signal strength over horizontal angle and vertical angle;
evaluating (40) the two-dimensional histogram to determine an estimate of the sensor mounting roll angle (ϕ).

2. The method of claim 1, wherein the detection data further includes distance information, the method further comprising:
filtering (26) the detections according to a distance range of a distance to the sensor, based on distance information of the detection data, to obtain distance-filtered detections.

3. The method of claim 1 or 2, wherein the method further includes:
accumulating the selected detections.

4. The method according to any one of the preceding claims, wherein the method further includes:
obtaining kinematic driving data (16) of the vehicle (12); and
checking whether a predetermined straight driving condition is fulfilled, based on the kinematic driving data,
wherein, when the straight driving condition is fulfilled, the selected detections are entered into the two-dimensional histogram.

5. The method according to claim 4, wherein the method further includes:
accumulating the selected detections that are associated with the straight driving condition being fulfilled,
wherein selected detections of one duration of detection or of more than one discontiguous sections of a duration of detection are accumulated.

6. The method according to any one of the preceding claims, wherein the evaluating (40) of the two-dimensional histogram comprises:
estimating (44) a linear relationship of vertical angle to horizontal angle, based on the two-dimensional histogram;
evaluating (46) the estimated linear relationship to determine the estimate of the sensor mounting roll angle (ϕ).

7. The method according to any one of the preceding claims, wherein the evaluating of the two-dimensional histogram comprises:
for each horizontal angle corresponding to a column of the histogram, determining a vertical angle of the column at which the column comprises a maximum signal strength, and assigning the determined vertical angle to the horizontal angle;
estimating a linear relationship of vertical angle to horizontal angle, based on the horizontal angles and their assigned determined vertical angles of the two-dimensional histogram; and
evaluating the estimated linear relationship to determine the estimate of the sensor mounting roll angle (ϕ).

8. The method according to any one of the preceding claims,
wherein the detection data further includes at least one of signal quality, quality of the angle information, radial extension of reflection, lateral extension of reflection or, if applicable, radar cross section,
wherein the method includes:
filtering the detections according to said at least one of signal quality, quality of the angle information, radial extension of reflection, lateral extension of reflection or, if applicable, radar cross section.

9. The method according to any one of the preceding claims, wherein the environment detection sensor (10) is one of a radar sensor or a lidar sensor.

10. A self-calibration method of an environment detection sensor (10) for a vehicle (12), the method comprising the method according to any one of the preceding claims, the method further comprising:
performing a self-calibration of the environment detection sensor (10) based on the determined estimate of the sensor mounting roll angle (ϕ).

11. An environment detection sensor (10) for a vehicle (12), comprising a control unit (11) that is configured for performing the method according to any one of the preceding claims.
